# EUROPEAN PATENT APPLICATION

(11) **EP 4 635 280 A1**
(43) Date of publication of application: **22.10.2025**
(21) Application number: 25156076.9
(22) Date of filing: 05.02.2025
(51) Int. Cl.: A01B 69/00, A01B 79/00

(54) **GUIDANCE SYSTEM FOR GUIDING AGRICULTURAL MACHINE**

(30) Priority: 19.04.2024 GB 202405579
(71) Applicant: AGCO International GmbH, 8212 Neuhausen am Rheinfall (CH)
(72) Inventor: CHRISTIANSEN, Martin Peter, 8930 Randers (DK)
(74) Representative: AGCO Intellectual Property Department

(57) **Abstract**

A guidance system is provided for an agricultural machine which cultivates a terrain surface. A long-wave infrared camera system captures an infrared image at least in front of the agricultural machine. The captured image is processed determine soil characteristics of different areas of the terrain in front of the agricultural machine and thereby identify which areas of the terrain in front of the agricultural machine have already recently been cultivated. An image is then generated which represents the already-cultivated regions and the non-cultivated regions.

## Description

### FIELD

Aspects of the present disclosure relate generally to guidance systems to provide operator assistance to assist the steering of an agricultural machine, for example when performing ground processing functions.

### BACKGROUND

Operator assistance systems for agricultural machines take a number of forms. In some instances, this can include incorporation of sensing technology onto the machine to provide additional information to an operator. This can include, for example, cameras or the like positioned about the machine to provide additional views to an operator. Other technologies may include LIDAR sensors or the like which advantageously provide information relating to depth in the image, e.g., distance to objects, etc.

Operating conditions can vary greatly during and between different agricultural operations. For instance, it may be beneficial to be able to provide an assistance system where the sensing technology can operate in low light conditions, such as at dusk or night. To date, no complete solution has been provided.

It would therefore be advantageous to provide an operator assistance system for an agricultural machine which assists the operator in low light operating conditions. The reduced visibility in low light conditions limits the ability of the machine operator to perform precise operations. It also raises safety concerns for the operator and affects the overall efficiency of operations.

One key function is to ensure uniform field coverage during an agricultural process, such as a tillage, ploughing or planting. In the absence of clear visual overviews, operators find it challenging to track which areas of the field have been cultivated and which haven't, leading to potential overlaps or missed areas. Ensuring proper overlap between passes is crucial for uniform cultivation, particularly in tasks like seeding, where missing an area or over-seeding can affect crop growth. Inefficient coverage due to poor visibility or inaccurate navigation can also lead to increased operational time and costs and can also adversely affect crop yield and soil health.

There are also challenges in navigating uneven terrain. The presence of uneven terrain adds to the complexity of maintaining consistent cultivation patterns and overlaps. Incorrect navigation in such conditions can lead to inefficient use of resources and uneven crop growth.

Many assistance systems have a dependency on external navigation systems for guidance. However, these systems can have limitations, particularly in terms of precision in uneven terrain, since many planners work in 2D. For example, the use of the Real-Time Kinematic Global Navigation Satellite System (RTK-GNSS) in uneven terrain often necessitates a large overlap, which can be resource-intensive and time-consuming.

WO 2021/185790 discloses an autonomous driving system which uses a thermal camera. Horizontal lines of camera image pixels are selected and thermal maxima along those horizontal lines are identified. The purpose is to monitor misalignment of the vehicle with respect to an alignment of a plantation or swath.

### BRIEF SUMMARY

According to examples in accordance with a first aspect of this disclosure, there is provided a guidance system for an agricultural machine which cultivates a terrain surface, comprising:
a long-wave infrared camera system for capturing an infrared image at least in front of the agricultural machine; and
a processor for processing the infrared image,
wherein the processor is configured to:
   determine soil characteristics of different areas of the terrain in front of the agricultural machine;
   identify which areas of the terrain in front of the agricultural machine have already recently been cultivated based on the determined characteristics; and
   generate an image which represents the already-cultivated regions and the non-cultivated regions.

This system is based on the recognition that characteristics of soil are altered by a cultivation process, and these alterations are detectable in a thermal image, and specifically in the long wave infrared spectrum band. By analyzing this wavelength, the system can distinguish between cultivated and non-cultivated soil, and thereby provide guidance assistance to an operator even in low light conditions.

The infrared image may, for instance, comprise a greyscale image produced by the long-wave infrared camera system.

The soil characteristics for example comprise one of more of (i) the soil temperature and (ii) the soil heat capacity and/or thermal conductivity. These thermal characteristics can be detected based on the infrared emissions in the long-wave infrared spectrum.

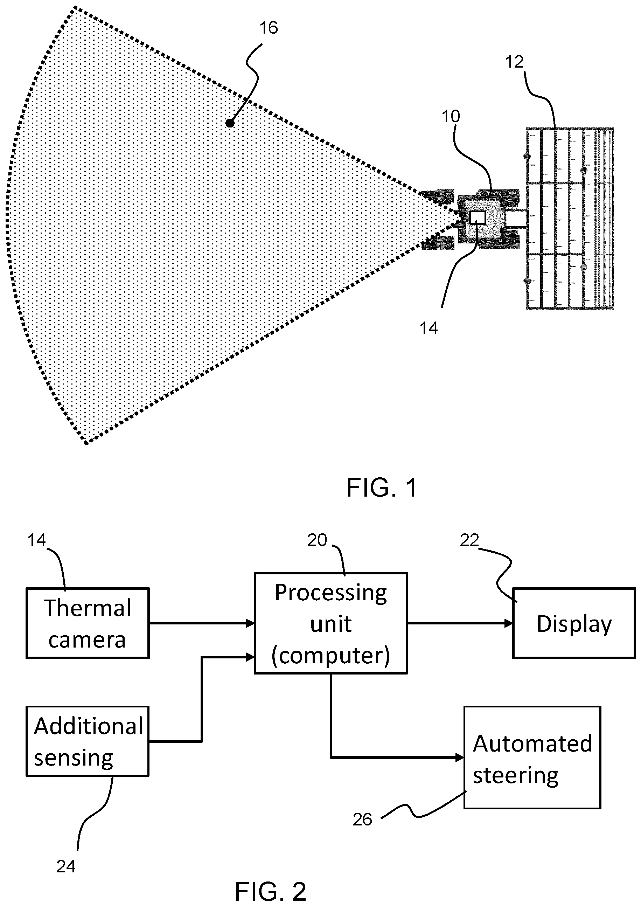

This disclosure relates to a detection system for detecting these soil characteristic changes caused by tillage. Figure 1 shows a camera system 14 for capturing an infrared image at least in front of the agricultural machine.

A display is preferably provided for displaying the generated image. The generated image may represent the same field of view as the camera system. However, it may instead represent a view which is easier for the operator to interpret, such as a bird's eye view, or a view representing the terrain from the viewpoint of the operator (for example as they would see if the light conditions were improved).

The processor may be further configured to determine a track to be followed, taking into account the identified areas. This track for example avoids overlap or gaps with already made passes of the cultivating implement.

The processor is for example configured to:
apply segmentation to identify the terrain and the sky, and to identify the cultivated and non-cultivated areas of the terrain.

The processor is for example configured to apply an enhancement curve to the infrared image. This improves the image contrast before segmentation.

The processor is for example further configured to process the captured infrared image to implement ambient temperature compensation. This enables more accurate detection of the thermal emission from the terrain surface.

The processor may be further configured to process the captured infrared image to identify different structures and to process the infrared image taking into account different emissivities of the different structures. This again improves the accuracy of the image interpretation.

The long-wave infrared camera system may for example comprise at least first and second cameras for capturing a 3D infrared image. This provides depth information in addition to cultivation information, and thereby enable more accurate guidance information to be generated.

The system may further comprise an additional image sensing unit. Again, this can supplement or enhance the information from the thermal camera system.

The additional image sensing unit may comprise one or more of:
a LIDAR system;
a stereo visible light camera system;
a global satellite positioning system.

This disclosure also relates to an agricultural machine comprising:
a driven vehicle;
a cultivating implement for processing the terrain on which the vehicle is driven; and
the guidance system as defined above.

The cultivating implement for example comprises a tiller or a plough or a tilling and seeding implement.

The processor may be configured to determine a track to be followed, and the driven vehicle comprises an automatic steering system for steering the driven vehicle to follow the determined track. Thus, the analysis of soil characteristics may be used to implement an automated track following function.

This disclosure also relates to a guidance method for an agricultural machine which processes a terrain surface, comprising:
capturing a thermal image at least in front of the agricultural machine using a long-wave infrared camera system;
determining soil characteristics of different areas of the terrain in front of the agricultural machine;
identifying which areas of the terrain in front of the agricultural machine have already recently been cultivated based on the determined soil characteristics; and
generating an image which represents the already-cultivated regions and the non-cultivated regions.

The generated image assists the operator to follow a suitable track.

The method may comprise applying segmentation to identify the terrain and the sky, and to identify the cultivated and non-cultivated areas of the terrain.

An enhancement curve may be applied to the greyscale image. Thus, the method may further comprise applying an enhancement curve to the thermal image.

This disclosure also relates to a computer program comprising computer program code means which is adapted, when said program is run on a computer, to implement the method defined above.

### BRIEF DESCRIPTION OF THE DRAWINGS

One or more embodiments of the disclosure will now be described, by way of example only, with reference to the accompanying drawings, in which:
Figure 1 shows a tractor towing a cultivating implement;
Figure 2 shows a data processing system;
Figure 3 is used to show possible image processing steps;
Figure 4 shows a tractor following a path with the assistance of the guidance system;
Figure 5 shows examples of possible camera position;
Figure 6 shows one example of a suitable tractor implement in the form of a tiller;
Figure 7 shows another example of a suitable tractor implement in the form of a tiller and seed planter; and
Figure 8 shows a guidance method.

### DETAILED DESCRIPTION

Aspects of the invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure relates to a guidance system for an agricultural machine which cultivates a terrain surface. A long-wave infrared camera system captures an infrared image at least in front of the agricultural machine. The captured image is processed determine soil characteristics of different areas of the terrain in front of the agricultural machine and thereby identify which areas of the terrain in front of the agricultural machine have already recently been cultivated. An image is then generated which represents the already-cultivated regions and the non-cultivated regions.

Figure 1 shows a tractor 10 towing a cultivating implement 12. Together, they may be considered to constitute an example of "an agricultural machine". The aspects of this disclosure may be applied to a stand-alone cultivating machine or a combination of towing vehicle (e.g., tractor) and towed cultivating implement (e.g., tiller).

The cultivating implement 12 has a function which disturbs the soil. This function may be tilling (such as ploughing or harrowing or furrowing) or seed planting.

In this document, any process which involves a physical disturbance to the soil will be defined as "tillage" and "tilling". Such processes have an impact on the soil characteristics. In particular:
(i) Soil temperature: Soil thermal conditions are affected by tillage practices;
(ii) Soil Heat Capacity and Thermal Conductivity: Tillage alters the soil's heat capacity and thermal conductivity, thereby affecting its thermal diffusivity (the ratio of thermal conductivity to heat capacity). This alteration occurs due to changes in soil organic matter, bulk density, inter-aggregate contact, and moisture content;
(iii) Soil Microstructure and Thermal Properties: Tillage significantly impacts the soil's microstructure, influencing its water thermal properties and nutrient content. Different tillage methods can lead to varying microstructures in the soil. For instance, conventional tillage typically results in a microstructure dominated by weakly separated plates, leading to higher bulk density and lower soil organic matter. This, in turn, affects the soil's capacity for moisture retention and temperature regulation, often resulting in deteriorated aggregate structure and fragility. On the other hand, conservation tillage methods can create soil characterized by moderately separated granular structure and highly separated aggregate structure, which is better at regulating soil temperature and retaining moisture.

This disclosure relates to a detection system for detecting these soil characteristic changes caused by tillage. Figure 1 shows a camera system 14 for capturing an infrared image at least in front of the agricultural machine. Image analysis on this is then used to determine the soil characteristics of different areas of the terrain at least in front of the agricultural machine. The changed soil characteristics result in a different infrared profile, specifically with the LWIR band.

The areas of the terrain in front of the agricultural machine which have already recently been cultivated can then be determined and an image can be generated which represents the already-cultivated regions and the non-cultivated regions.

The camera system 14 comprises at least one Long-Wave Infrared (LWIR) camera. It thus operates in the wavelength range 8-14 µm (or within a sub-range within this general range). Suitable sub-ranges for example have a spread of 2 µm (i.e., 8-10 µm, 10-12 µm, 12-14 µm) or even a spread of 1 µm. Sub-ranges may be formed by applying filters to the individual pixels.

This general range is well-suited for detecting thermal radiation emitted by objects at ambient temperatures. The detector of such a camera system is for example a microbolometer, which is heated by infrared radiation in this wavelength range, causing a change in electrical resistance. This type of detector does not require cooling. Microbolometers are for example based on amorphous silicon or vanadium oxide.

The resolution of the camera system is for example in the range of from 15k pixels to 1M pixels, Examples are 160x120 pixels to 640x512 pixels. Suitable LWIR cameras can for example detect temperature differences as small as 0.05°C under ideal conditions. The imaging may be radiometric (providing temperature data for each pixel) or non-radiometric (providing only a visual representation and hence only relative thermal information).

Thermal cameras capture data in grayscale formats, typically mono8 or mono16, where 'mono' signifies that each pixel's value represents a single intensity of infrared radiation, which corresponds to temperature variations in the scene. These grayscale formats, mono8 and mono16, use 8-bit and 16-bit data per pixel respectively, offering varying levels of temperature sensitivity and image resolution.

The camera system preferably has a robust design for outdoor agricultural use (so that it can operate in various environmental conditions, including varying temperatures, humidity levels, and exposure to dust or moisture typical in agricultural settings) and operates with a suitable frame rate to capture moving scenes effectively, such as (e.g., 5Hz to 90Hz).

The camera's field of view 16 should be wide enough to capture a substantial area of the field in front of the tractor. The camera is for example mounted on the cab roof and should be adjusted for optimal coverage, considering the height and angle for best viewing the soil surface. There is continuous data capture, with images stored in a buffer for real-time processing.

Figure 2 shows the data processing system, comprising the thermal camera system 14, a processing unit 20 and a display 22.

Figure 2 additionally shows that additional image sensing functionality may also be employed, as represented by unit 24. This is discussed further below. Furthermore, in addition to displaying information to assist guidance, the agricultural vehicle may have an automated steering system 26, and it may be controlled using information derived from the thermal camera system (in addition to information derived from other sources such as a satellite positioning system).

The image data processing uses an algorithm for sensor noise mitigation, for example using spatial filtering techniques like Gaussian or median filtering. Filtering is also carried out to address noise introduced by environmental factors such as atmospheric conditions, reflections, and emissivity variations of different surfaces.

Image calibration is also carried out, by calibrating the camera to correct for lens distortion and other sensor-specific aberrations. Intrinsic calibration is used to ensure that the thermal images accurately represent the scene. This process typically involves using a calibration pattern (like a checkerboard) and specialized software to determine the camera's internal parameters (focal length, optical center, and distortion coefficients).

The image processing also performs ambient temperature compensation. Since the thermal camera is sensitive to ambient temperature, compensating for these variations is performed to enable accurate temperature readings. This may for example involve using reference temperatures or integrating readings from other sensors to adjust the thermal data accordingly. Regular checks and recalibrations may be performed to ensure that the camera system maintains its accuracy over time, especially given the challenging conditions of agricultural environments.

Emissivity adjustments may also be carried out. Different materials emit infrared radiation differently. Emissivity adjustments ensure that the camera accurately interprets the thermal radiation from various surfaces. For example, soil, vegetation, and other materials have different emissivities. Thus, image segmentation may be used to identify different structures within the image, and different emissivities may be allocated to those different structures, to assist in the interpretation of the thermal image data.

The steps above relate to data processing before the initial image generation. Image processing steps are then also carried out.

Thermal contrast enhancement is for example performed. Linear and non-linear S-curve conversion may be employed. This involves adjusting the intensity values of the thermal image. A linear transformation can scale the pixel values to utilize the full range of the display, while a non-linear S-curve conversion can enhance contrast by increasing the luminance of high-temperature regions more significantly than low-temperature regions.

Histogram equalization may be employed to spread out the most frequent intensity values in the image, enhancing global contrast, especially in regions with low contrast.

Color Mapping (e.g., Jet Color Space) may be used to convert a grayscale thermal image into a color image using color maps. This can make features more distinct. High temperatures are for example mapped to red, and low temperatures are matched to blue, making it easier to visually interpret the thermal data. This color mapping may be used to define an image displayed to an operator of the agricultural machine.

Edge detection algorithms are used for boundary identification (such as Sobel, Canny, or Laplacian filters). This may be used to identify boundaries between a field and its surroundings, to enable suitable image segmentation. Instance segmentation identifies and delineates each object of interest (e.g., each individual tractor), while semantic segmentation categorizes each pixel as belonging to a certain class (e.g., tillage area, non-tillage area) without differentiating between instances of the same class. Segmentation can also distinguish between a field and the sky other irrelevant background, and can detect humans, animals, tractors, and other vehicles. Identifying and categorizing different entities in the field in this way provides safety and operational efficiency.

Image segmentation may be based on machine learning models such as deep learning models like Convolutional Neural Networks (CNNs) trained on annotated datasets. Transfer learning can be employed using pre-trained models on similar tasks to reduce training time and data requirements.

In addition to providing output images in a desirable form, color mapping to a color space may also be used to provide data in a format suitable for the neural network. For example, the thermal imaging data may be converted into RGB color maps. By mapping the grayscale intensity values to color, the thermal data can be visualized and analyzed more effectively. Common color maps used for this purpose include 'jet', which spans across the visible spectrum from blue to red, and 'lava', which offers a fiery spectrum from black through red to yellow. Other color maps like 'gray', 'hot', and 'rainbow' are also used depending on the application and the specific details needed to be highlighted in the thermal data.

Standard DNN architectures may for example be used for tasks like semantic segmentation. Semantic segmentation involves dividing an image into segments to identify and analyze different parts of the image at a pixel level, which is particularly useful in applications like autonomous driving, industrial inspections, and environmental monitoring. Using RGB images enables the use of pre-trained networks and standard training techniques, which often expect three-channel input, thereby simplifying the machine learning pipeline and potentially improving the effectiveness of the model.

By employing these techniques, thermal imaging can be integrated into advanced Al systems, enhancing their capability to interpret complex scenes and make intelligent decisions based on thermal data.

For example, the color mapping may involve converting a 16 bit mono range into an 8 bit RGB value using a color map such as JET, IRON or Magma. The 16 bit information is preserved and can be interpreted by a normal semantic and instance deep neural network. Thus, color mapping may be performed before image analysis.

After image analysis, each pixel may be categorized as a tillage area or a non-tillage area, so that tilled and untilled soil is differentiated based on their thermal signature. The tilled soil has a distinct thermal pattern due to the recent disturbance and exposure.

The segmented image data is then displayed on a terminal or tablet within the tractor's cabin. This display may, for example, show a map of the field with marked areas indicating tilled and untilled regions. In this way, the the operator receives real-time feedback on the tillage progress, helping them make immediate adjustments in the tractor's path to ensure complete and uniform coverage. At the same time, they can operate at nighttime conditions.

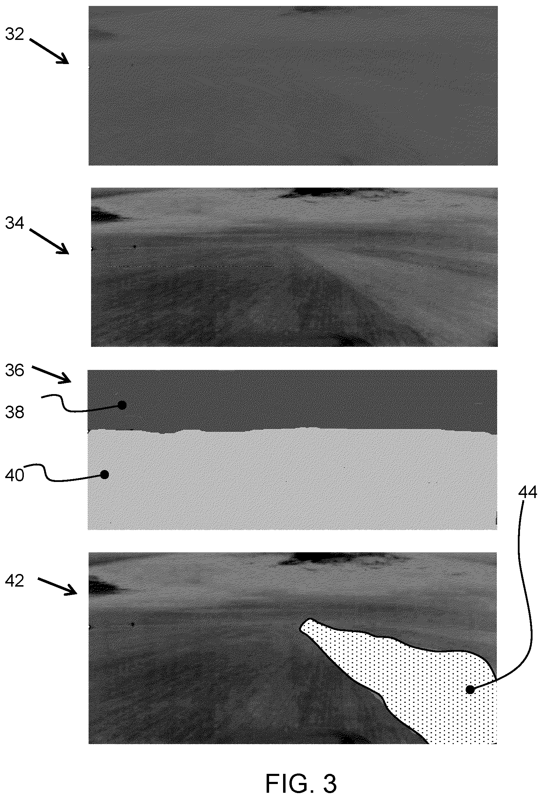

Figure 3 is used to show the image processing steps explained above.

The image is captured by the camera as a greyscale image, such as a 16 bit greyscale image, hence with each pixel stored as a 16 bit value.

In some examples, the greyscale image may be processed, e.g., each pixel value may be clipped to have a predefined maximum and/or predefined minimum value, i.e., clipped within a predefined range. In other words, the greyscale image may be filtered to restrict each pixel value to fall within a predefined range of values. The predefined range of values may represent a predefined temperature range, e.g., between -20°C and 40°C or another temperature range. This can be achieved using appropriate calibration techniques of the camera system.

Image 32 represents the captured image as a greyscale image. Enhancement curves may be applied to improve the contrast, resulting in image 34. Image segmentation is then carried out. First, as shown by image 36, the background such as sky 38 is distinguished from the field 40. Then, as shown in image 42, the cultivated area 44 is identified (e.g., from the part of the image identified as representing the field 40).

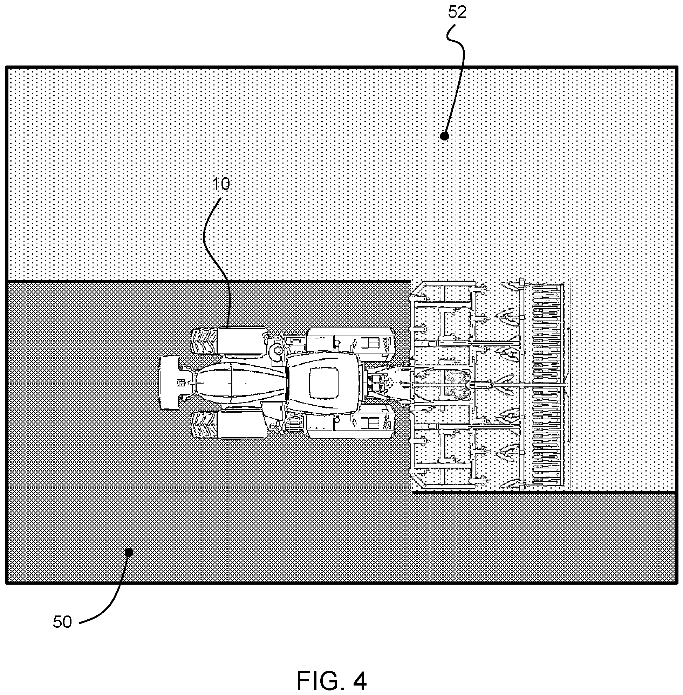

Figure 4 shows the tractor 10 following a path along an uncultivated area 50, to create a cultivated area 52.

The displayed image may represent a view of the field in front of the operator and/or it may represent a plan view such as shown in Figure 4.

As an example, and as previously explained, the displayed image may be a display of the segmented image data captured by the camera. For instance, the displayed image may comprise a display of the image captured by the camera with the segmented image data overlaying the image captured by the camera. In another scenario, the displayed image may comprise a display of a further processed version of the image captured by the camera, e.g., a Jet color space conversion of the image captured by the camera, with the segmented image data overlaying the image captured by the camera. Such an approach improves the ease for a viewer of the displayed image. These examples are particularly useful when the field of view of the camera includes a region in front of the tractor or agricultural machine.

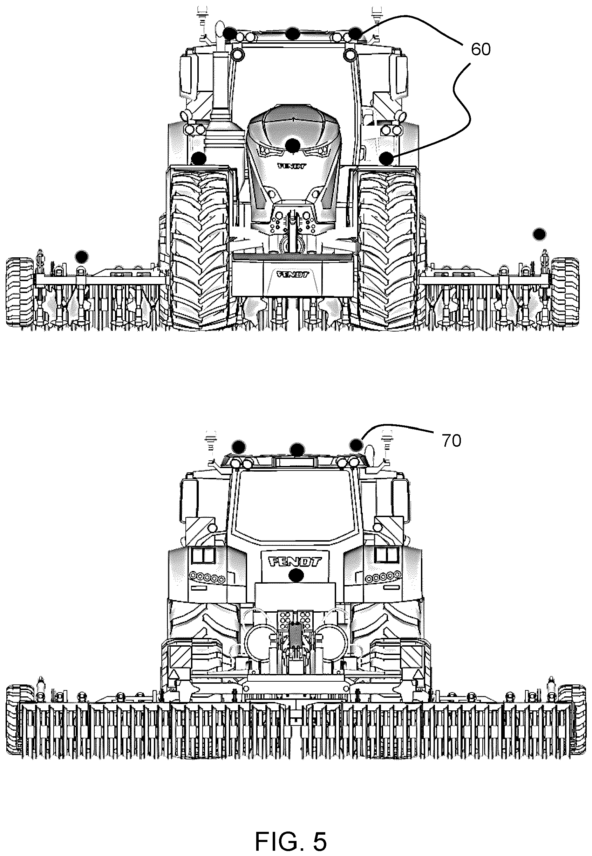

Figure 5 shows examples of possible camera position. The top image shows a front view. The camera locations 60 shown include:
- The top of the cab facing forward (in the center and at the edges);
- The front of the bonnet;
- On the front wings;
- At the outside ends of the cultivating boom.

The bottom image shows a rear view. The camera locations 70 shown include:
- The top of the cab facing back (in the center and at the lateral edges);
- At the back of the tractor.

Camera images are preferably collected in front and behind the tractor. The area behind the tractor is known to have been cultivated so provides reference information to assist in the processing of the forward-facing camera, where the field of view includes cultivated and non-cultivated areas.

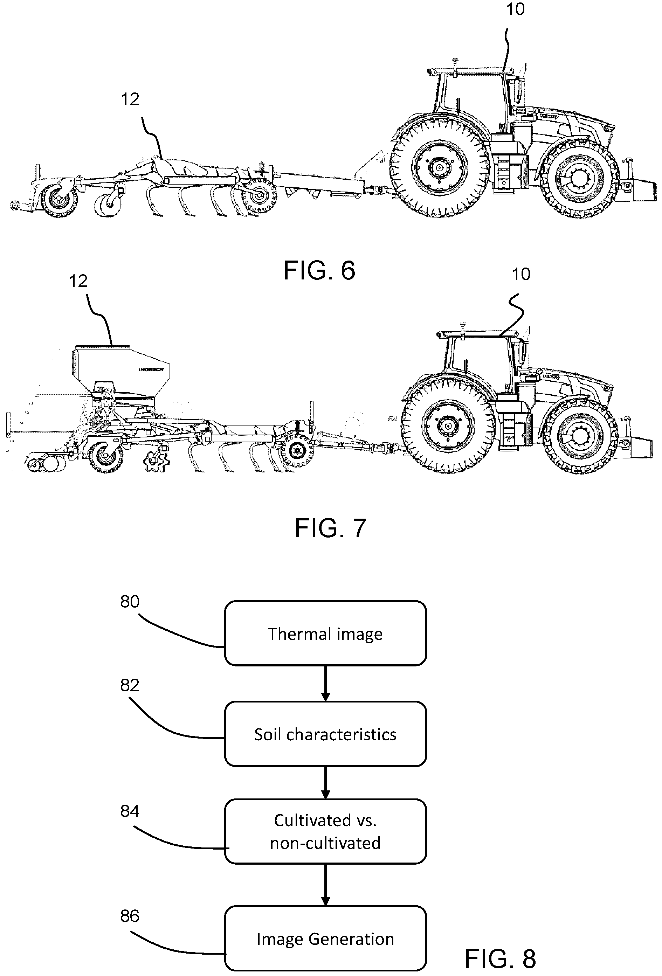

Figure 6 shows one example of a suitable tractor implement 12 in the form of a tiller. Figure 7 shows another example of a suitable tractor implement 12 in the form of a tiller and seed planter.

The infrared camera system may be combined with other sensing and imaging modalities in order to improve the quality of information provided to the operator.

A first option is to provide dual thermal cameras for stereo imaging. Thus, the thermal camera system may comprise two (or more) cameras. By using two thermal cameras set at a fixed distance apart, a stereo image can be created. This setup allows for depth perception and 3D point cloud generation. The dual-camera system captures two slightly different thermal images of the same field area. By comparing these images, the system can calculate depth information, creating a 3D thermal map of the field. This depth data can be used for automated navigation, allowing the tractor to adjust its path based on the terrain and obstacles detected. The system would use algorithms to accurately match points between the two images and calculate depth, considering the unique properties of thermal imagery.

Other options make use of the additional sensing capability 24 shown in Figure 2.

A second option is to combine the thermal camera described above (2D) with a LiDAR system for 3D imaging. The LiDAR system for example operates at wavelengths of 1200nm or 1550nm and is used to provide precise 3D point-cloud information. The LiDAR system generates a detailed 3D map of the field by emitting laser pulses and measuring the time taken for the reflections to return. By overlaying this point-cloud with thermal data from the thermal camera system, the system can assign thermal properties to each point in the cloud. This enriched dataset provides comprehensive information about the field, including both physical and thermal characteristics. This integration allows for more accurate automated navigation, as the system can identify and react to both physical and thermal anomalies in the field, such as obstacles or variations in soil conditions.

A third option is to implement a standard stereo camera, preferably with a large baseline (spacing between the cameras). This enhances the depth perception and creates a detailed 3D thermal map. By integrating a stereo camera with the thermal data, the system can provide a comprehensive view that includes both visual and thermal information. The large baseline enhances the depth accuracy in the stereo images. This setup is particularly useful for detecting obstacles and variations in the field that might not be as apparent in thermal images alone. The combined data can be used for more precise automated navigation, helping the tractor to avoid obstacles and better understand the terrain.

A fourth option is to combine positioning data (e.g., Real-Time Kinematic Global Navigation Satellite System, RTK-GNSS, data) with segmented thermal data. Integrating RTK-GNSS data with the segmented thermal data provides enhanced navigation accuracy. RTK-GNSS provides highly accurate location data, which can assist precise field navigation. By combining this location data with segmented thermal images (which distinguish between tilled and untilled areas, among other things), the system can navigate the tractor with high precision. This combination ensures that the tractor follows the optimal path for tillage, avoiding already tilled areas, and maintaining the desired overlap between passes. This approach enhances the efficiency of the tillage process, ensuring uniform coverage and minimizing redundant passes over the same area.

Each of these enhancement options leverages different technologies to augment the capabilities of the thermal camera system, aiming to improve the efficiency, accuracy, and safety of automated navigation in agricultural tillage operations.

Figure 8 shows a guidance method for an agricultural machine which processes a terrain surface. The method comprises, in step 80, capturing a thermal image at least in front of the agricultural machine using a long-wave infrared camera system. In step 82, soil characteristics are determined of different areas of the terrain in front of the agricultural machine (by processing the thermal image). The areas of the terrain in front of the agricultural machine which have already recently been cultivated are identified in step 84 based on the determined soil characteristics. An image is then generated in step 86 which represents the already-cultivated regions and the non-cultivated regions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

All references cited herein are incorporated herein in their entireties. If there is a conflict between definitions herein and in an incorporated reference, the definition herein shall control.

## Claims

1. A guidance system for an agricultural machine which cultivates a terrain surface, comprising:
a long-wave infrared camera system (14) for capturing an infrared image at least in front of the agricultural machine; and
a processor (20) for processing the infrared image,
wherein the processor is configured to:
determine soil characteristics of different areas of the terrain in front of the agricultural machine;
identify which areas of the terrain in front of the agricultural machine have already recently been cultivated based on the determined characteristics; and
generate an image which represents the already-cultivated regions and the non-cultivated regions.

2. The system of claim 1, comprising a display (22) for displaying the generated image.

3. The system of claim 1 or 2, wherein the processor (20) is further configured to determine a track to be followed taking into account the identified areas.

4. The system of any one of claims 1 to 3, wherein the processor (20) is configured to:
apply segmentation to identify the terrain and the sky, and to identify the cultivated and non-cultivated areas of the terrain.

5. The system of any one of claims 1 to 4, wherein the processor is further configured to process the captured infrared image to implement ambient temperature compensation.

6. The system of any one of claims 1 to 5, wherein the processor is further configured to process the captured infrared image to identify different structures and to process the infrared image taking into account different emissivities of the different structures.

7. The system of any one of claims 1 to 6, wherein the long-wave infrared camera system comprises at least first and second cameras for capturing a 3D infrared image.

8. The system of any one of claims 1 to 7, further comprising an additional image sensing unit (24), comprising one or more of:
a LIDAR system;
a stereo visible light camera system;
a global satellite positioning system.

9. An agricultural machine comprising:
a driven vehicle (10);
a cultivating implement (12) for processing the terrain on which the vehicle is driven; and
the guidance system of any one of claims 1 to 8.

10. The agricultural machine of claim 9, wherein the cultivating implement (12) comprises a a tiller or a plough or a tilling and seeding implement.

11. The agricultural machine of claim 9 or 10, wherein the processor (20) is configured to determine a track to be followed, and the driven vehicle comprises an automatic steering system (26) for steering the driven vehicle to follow the determined track.

12. A guidance method for an agricultural machine which processes a terrain surface, comprising:
(80) capturing a thermal image at least in front of the agricultural machine using a long-wave infrared camera system;
(82) determining soil characteristics of different areas of the terrain in front of the agricultural machine;
(84) identifying which areas of the terrain in front of the agricultural machine have already recently been cultivated based on the determined soil characteristics; and
(86) generating an image which represents the already-cultivated regions and the non-cultivated regions.

13. The method of claim 12, comprising applying segmentation to identify the terrain and the sky, and to identify the cultivated and non-cultivated areas of the terrain.

14. The method of claim 13, further comprising applying an enhancement curve to the thermal image.

15. A computer program comprising computer program code means which is adapted, when said program is run on a computer, to implement the method of any one of claims 12 to 14.
